# EUROPÄISCHE PATENTSCHRIFT

(11) **EP 2 057 038 B1**
(45) Veröffentlichungstag und Bekanntmachung des Hinweises auf die Patenterteilung: **23.03.2011**
(21) Anmeldenummer: 07821320.4
(22) Anmeldetag: 15.10.2007
(51) Int. Cl.: B60R 16/02

(54) **TÜLLE ZUR ANORDNUNG ZWISCHEN ZWEI MONTAGEELEMENTEN ZUM GESCHÜTZTEN DURCHFÜHREN VON KABELN/LEITUNGEN ODER DERGLEICHEN SOWIE VERFAHREN ZU DEREN HERSTELLUNG**
BUSH TO BE ARRANGED BETWEEN TWO FITTING ELEMENTS FOR PASSING THROUGH CABLES/LINES OR THE LIKE IN PROTECTED FASHION AND METHOD FOR ITS PRODUCTION
PASSE-CABLE DESTINE A ETRE DISPOSE ENTRE DEUX ELEMENTS DE MONTAGE, PERMETTANT UN PASSAGE PROTEGE DE CABLES, DE CONDUCTEURS OU ANALOGUES, ET SON PROCEDE DE PRODUCTION

(30) Priorität: 26.10.2006 DE 102006050544
(43) Veröffentlichungstag der Anmeldung: 13.05.2009
(73) Patentinhaber: Bayerische Motorenwerke AG, 80788 München (DE)
(72) Erfinder: BRUNNER, Johann, 84494 Neumarkt - St. Veit (DE); BLUMBERG, Erich, 80992 München (DE)
(74) Vertreter: HOFFMANN EITLE
(86) Internationale Anmeldenummer: PCT/EP2007/060953
(87) Internationale Veröffentlichungsnummer: WO 2008/049751

(56) Entgegenhaltungen:
- EP-A- 1 157 894
- EP-A- 1 158 637
- DE-A1- 3 500 358
- DE-A1- 10 140 714
- FR-A- 2 883 109
- JP-A- 2001 132 871
- US-A1- 2006 086 524

## Beschreibung

Die vorliegende Erfindung betrifft eine Tülle zur Anordnung zwischen zwei Montageelementen zum geschützten Durchführen von Kabeln/Leitungen oder dergleichen. Beispielsweise betrifft sie eine Tülle zum Einbau in Kraftfahrzeugen und dort insbesondere zwischen Montageelementen wie z. B. der Tür oder Heckklappe und der Karosserie. Insbesondere betrifft die vorliegende Erfindung Tüllen mit einem länglichen schlauchförmigen Tüllenkörper mit einem Mittelabschnitt und an dessen Enden vorgesehenen Kopfabschnitten sowie einer Verrasteinrichtung zum Einknöpfen der Tülle in Montageöffnungen der Montageelemente an jedem der Köpfe und integral damit ausgebildet, wobei die Verrasteinrichtungen einen umlaufenden Steg mit wenigstens einem daran ausgebildeten Rasthaken aufweisen, der wenigstens eine radial außenliegende Rastnase aufweist.

Derartige Tüllen sind beispielsweise aus der DE 33 40 664 A1 und der DE 100 58 563 A1 bekannt. Dabei ist der Tüllenkörper aus einem weichelastischen Kunststoff, vorzugsweise einem thermoplastischen Elastomer, und die Verrasteinrichtungen aus einem hartelastischen Kunststoff, vorzugsweise einem Polypropylen, hergestellt. Um eine solche Tülle herzustellen, wird, in z. B. einem Spritzgießwerkzeug, zunächst der Tüllenkörper ausgebildet und in einem nachfolgenden Verfahrensschritt werden die harten Komponenten, d. h. die Verrasteinrichtungen, an dem Tüllenkörper angespritzt. Durch diese Herstellungsabfolge wird es ermöglicht, den zum Ausbilden des länglichen schlauchförmigen Tüllenkörpers notwendigen Kern zu entfernen, bevor die Verrasteinrichtungen angeformt bzw. ausgebildet werden.

Ferner offenbart die FR-A-2 883 109 eine Tülle mit den Merkmalen im Oberbegriff von Anspruch 1.

Die DE-A-35 00 358 offenbart ferner eine Tülle mit einem länglichen schlauchförmigen Tüllenkörper und Köpfen an den jeweiligen Enden. Die Köpfe weisen jeweils eine Verrasteinrichtung auf, die einen oder mehrere Rasthaken aufweisen. Einer der Köpfe ist aus Gummi gebildet und weist einen Spreizring auf, um den Kopf in einer Öffnung zu fixieren. Der andere Kopf weist einen Rasthaken mit einer radial außen liegen Rastnase auf.

Die US-A-2006/086524 und die JP-A-2001-132871 offenbaren eine Tülle mit einem länglichen schlauchförmigen Tüllenkörper mit Köpfen an beiden Enden, die eine Einrichtung zum Einknöpfen der Tülle in Montageöffnungen des Montageelements aufweisen, wobei die Köpfe und der Tüllenkörper aus dem gleiche Material, z. B. Gummi gebildet sind. Aus dem Stand der Technik sind des Weiteren Tüllen zur Anordnung in einer Montageöffnung eines Montageelements zum geschützten Durchführen von Kabeln/Leitungen oder dergleichen durch das Montageelement bekannt, die im Gegensatz zu den Tüllen der vorliegenden Erfindung keinen im Wesentlichen länglichen schlauchförmigen Tüllenkörper mit einem Mittelabschnitt und zwei Köpfen aufweisen, sondern lediglich einen Tüllenkörper, der in die Montageöffnung eingeknöpft wird, um eine Durchführung von Kabeln, Leitungen und dergleichen durch die Öffnung zu ermöglichen. Aus der DE 101 40 714 C2 ist es beispielsweise bekannt, derartige Tüllen als 2-Komponentenbauteil auszugestalten, wobei der Tüllenkörper aus Gummi, z. B. EPDM, und die Verrasteinrichtung aus einem hartelastischen Kunststoff, vorzugsweise einem glasfaserverstärkten Polyamid, gebildet sind. Diese Materialkombination hat gegenüber der Verwendung von zwei thermoplastischen Kunststoffen die folgenden Vorteile: Zum einen können die Werkzeuge günstiger hergestellt werden, woraus niedrigere Teile bzw. Produktpreise resultieren. Darüber hinaus weist Gummi im Vergleich zu einem thermoplastischen Kunststoff einen höheren Druckverformungsrest (Rückstellvermögen) auf. Die Dichtigkeit, insbesondere die Wasserdichtigkeit, die die Tülle bereitstellen soll, wenn sie im Fahrzeug verbaut ist, kann damit auch bei extrem hohen Anforderungen sichergestellt werden. Diesbezüglich sei erwähnt, dass die in den später beschriebenen bevorzugten Ausführungsformen erläuterte Tülle eine Tülle zum Einsetzten zwischen der Heckklappe und der Fahrzeugkarosserie ist. Diese Tülle muss im Bereich der Wasserrinne an der Heckklappe die Dichtigkeit zum Innenraum sicherstellen. Über das Dach läuft das gesamte Regenwasser nach hinten in die Wasserrinne, so dass erhebliche Wassermengen an dieser Stelle auftreten. Um ein Eindringen zu verhindern, muss die Tülle damit erhöhten Dichtigkeitsanforderungen genügen. Ein weiterer technischer Vorteil liegt in der leichteren Entformbarkeit der Teile aus Gummi aus dem Werkzeug, weil sich Gummi zum Entformen dehnen lässt.

Oben beschriebene Tüllen werden wie folgt hergestellt. In einem ersten Arbeitschritt wird die Verrasteinrichtung bzw. das die

Verrasteinrichtung bildende Bauteil aus hartelastischem Kunststoff ausgebildet, z. B. spritzgegossen. Dieses Bauteil wird als Einsatz in eine weitere Form eingesetzt und mit Gummi umspritzt. Anders als bei den oben beschriebenen Tüllen wird also zunächst die Verrasteinrichtung ausgebildet und dann mit dem Tüllenkörper umspritzt. Bei Tüllen, wie sie in der DE 10 140 714 C2 beschrieben ist, führt diese Verfahrensweise nicht zu Problemen, weil der zum Ausbilden des Tüllenkörpers notwendige Kern stets aus dem der Verrasteinrichtung entgegengesetzten Ende herausgezogen und damit entfernt werden kann. Zu diesem Zweck sind die Kerne meist mit einer Drucklufteinrichtung verbunden, mittels derer der Tüllenkörper aufgeblasen bzw. aufgeweitet werden kann, so dass sich der Kern leicht entfernen lässt.

Sind an beiden offenen Enden des Tüllenkörpers bzw. dessen Köpfen Verrasteinrichtungen aus einem hartelastischen Kunststoff vorgesehen, ist das Entfernen des Kerns jedoch problematisch. Eine besondere Problematik ergibt sich dann, wenn die Köpfe relativ zur Längserstreckung des Mittelabschnitts geneigt sind. Aus diesem Grund wurden die aus der DE 10 140 714 C2 bekannten Materialien bisher nicht auf Tüllen, wie sie eingangs beschrieben wurden, übertragen.

Dementsprechend besteht die Aufgabe der vorliegenden Erfindung darin, eine Tülle zur Anordnung zwischen zwei Montageelementen zu schaffen, bei der der Tüllenkörper aus Gummi und die an beiden Enden des Tüllenkörpers angeordneten Verrasteinrichtungen aus hartelastischem Kunststoff gebildet sind.

Diese Aufgabe wird erfindungsgemäß durch eine Tülle mit den Merkmalen des Patentanspruchs 1. Vorteilhafte Weiterbildungen der vorliegenden Erfindung sind in den abhängigen Patentansprüchen definiert.

Der vorliegenden Erfindung liegt der Gedanke zu Grunde, den Öffnungsquerschnitt der Verrasteinrichtung relativ zu dem Querschnitt des schlauchförmigen Tüllenkörpers derart auszugestalten, dass der

Öffnungsquerschnitt einerseits größer ist als der in Längsrichtung des Tüllenkörpers bzw. Mittelabschnitts maximale Querschnitt des Tüllenkörpers und andererseits derart auszugestalten, dass das Entfernen des Kerns aus dem schlauchförmigen Tüllenkörper auf einfache Art und Weise, vorzugsweise in einer im Wesentlichen translatorischen Bewegung möglich ist. Darüber hinaus ermöglicht die Kombination Gummi/Kunststoff, dass ein extrem kleines Spaltmaß zwischen Faltenbalghöhe und Lichterweite des Kunststoffrahmens, der die Verrasteinrichtung mit dem umlaufenden Steg und dem bzw. den Rasthaken bildet, ein Entformen der Tülle noch immer möglich ist. Dies wird insbesondere durch die Dehnbarkeit des Gummis beim Entformen ermöglicht.

Dies wird erfindungsgemäß durch eine Tülle zur Anordnung zwischen zwei Montageelementen zum geschützten Durchführen von Kabeln/Leitungen oder dergleichen gelöst, umfassend einen länglichen schlauchförmigen Tüllenkörper mit jeweils einem Kopf an seinen beiden entgegengesetzten Enden und einer Verrasteinrichtung zum Einknöpfen der Tülle in Montageöffnungen der Montageelemente an jedem der Köpfe. Erfindungsgemäß sind die Verrasteinrichtungen integral mit dem Tüllenkörper, vorzugsweise als 2-Komponentenbauteil, ausgebildet. Dies kann beispielsweise in einem Zwei-Komponentenspritzgießverfahren erfolgen. Der längliche schlauchförmige Tüllenkörper weist einen im Wesentlichen geradlinig verlaufenden Mittelabschnitt zwischen seinen beiden Köpfen auf und die Köpfe bilden an ihrem offnen Ende eine erste Innenumfangsfläche. Gleichermaßen umfasst die Verrasteinrichtung einen umlaufenden Steg mit wenigstens einem daran ausgebildeten Rasthaken, der wenigstens eine radial außenliegende Rastnase aufweist, wobei der Steg entgegengesetzt der Rastnase eine zweite Innenumfangsfläche bildet. Der Tüllenkörper ist dabei aus Gummi und die Verrasteinrichtungen sind aus hartelastischem Kunststoff gebildet. Ferner ist wenigstens eine der zweiten Innenumfangsflächen, d. h. die Innenumfangsfläche wenigstens einer der Verrasteinrichtungen an einem der Köpfe derart ausgestaltet, dass sie radial außerhalb der Flucht entsprechend der ersten Innenumfangsfläche, d. h. der ersten Innenumfangsfläche des Kopfes, an die die zweite Innenumfangsfläche angrenzt, verläuft. Die erste und zweite Innenumfangsfläche sind über eine Schnittstelle hintereinander angeordnet. Mit anderen Worten schneidet der imaginäre Fortsatz der ersten Innenumfangsfläche, projiziert durch den umlaufenden Steg der Verrasteinrichtung, die zweite Innenumfangsfläche nicht. Des Weiteren ist der Rasthaken so ausgebildet, dass er in Radialrichtung so elastisch ist, dass er, wenn er den imaginären Fortsatz der ersten Innenumfangsfläche schneidet, beim Entfernen des Kerns nach außen wegfedern kann.

Besonders problematisch ist ferner die Ausgestaltung einer Tülle mit beidseits vorgesehenen Verrasteinrichtungen aus hartelastischem Kunststoff und einem Tüllenkörper aus Gummi, bei denen die Köpfe relativ zur Längsachse des Mittelabschnitts geneigt angeordnet sind. Diese Neigung führt dazu, dass die zweite Innenumfangsfläche der Verrasteinrichtung relativ zu dem Montageelement, in dessen Montageöffnung die Tülle einzuknöpfen ist, zumindest abschnittsweise geneigt ausgebildet sein muss. Daher müssen auch die Rasthaken geneigt dazu ausgebildet sein. Auf überraschende Weise hat sich dabei herausgestellt, dass eine solche Schräge bzw. geneigte Ausrichtung der Rasthaken zu keinem Nachteil bezüglich der Haltekräfte der Tülle in den Montageöffnungen führt, sondern diese sogar noch erhöht. Darüber hinaus hat die geneigte Anordnung der Köpfe relativ zum Mittelabschnitt den Vorteil einer Querschnittsreduzierung der Tülle bezüglich ihres maximalen Querschnitts. Die Reduzierung des maximalen Querschnitts der Tülle führt dazu, dass die gesamte Tülle leichter durch Öffnungen geführt werden kann. Dies ist insbesondere dann wichtig, wenn die Tülle bereits auf einem Kabelsatz vormontiert und so, in z. B. einem Kraftfahrzeug, zu verbauen ist, wozu die Tülle, bis sie an ihrer endgültigen vorbestimmten Stelle eingeknöpft werden kann, durch eine oder mehrere Öffnungen gefädelt werden muss.

Vorzugsweise ist die zweite Innenumfangsfläche radial nach außen versetzt mit der entsprechenden ersten Innenumfangsfläche im Wesentlichen fluchtend ausgestaltet. Das bedeutet mit anderen Worten ausgedrückt, dass bei einer z. B. zylindrischen Ausgestaltung der ersten Innenumfangsfläche die zweite Innenumfangsfläche, konzentrisch zur ersten Innenumfangsfläche, ebenfalls zylindrisch ausgebildet ist, jedoch einen geringfügig größeren Durchmesser aufweist als der Zylinder, der die erste Innenumfangsfläche bildet. Gleiches gilt auch beispielsweise, wenn die erste Innenumfangsfläche einen ovalen Querschnitt hat. In einem solchen Fall wäre auch die zweite Innenumfangsfläche im Wesentlichen im Querschnitt oval ausgestaltet. Unter "im Wesentlichen" ist diesbezüglich zu verstehen, dass sich die Querschnitte der Innenumfangsfläche nur im Wesentlichen gleichen müssen, jedoch auch geringfügige Abweichungen davon vorliegen können, insofern die zweite Innenumfangsfläche außerhalb der Flucht der ersten Innenumfangsfläche verläuft, wie es oben definiert wurde. Unter radial nach außen versetzt fluchtend ist demnach zu verstehen, dass die Querschnittsform im Wesentlichen gleich ist, jedoch der Querschnitt der zweiten Innenumfangsfläche radial außerhalb des Querschnitts der ersten Innenumfangsfläche verläuft.

Wie es bereits erwähnt wurde, ist der Tüllenkörper in seinem Querschnitt bevorzugterweise flach, insbesondere oval bzw. elliptisch ausgestaltet. In einem solchen Fall ist es bevorzugt, dass wenigstens zwei der einander gegenüberliegenden Abschnitte, d. h. die kürzeren oder längeren Seiten bzw. Abschnitte des flachen Querschnitts zu den Abschnitten der entsprechenden ersten Innenumfangsfläche radial nach außen versetzt, fluchten. Insbesondere fluchten die Abschnitte der zweiten Innenumfangsfläche, die an den entgegengesetzten Enden einer Querschnittsachse des Querschnitts der ersten Innenumfangsfläche angrenzen, die in einer die Längsachse des Mittelabschnitts schneidenden Ebene angeordnet ist.

Weiter ist es bevorzugt, dass der Rasthaken an einem Abschnitt des Stegs ausgebildet ist, der die, den kürzeren oder längeren, Seiten entsprechenden Abschnitte der zweiten Innenumfangsfläche bildet. Dies ist insbesondere dadurch begründet, dass die schräge Ausgestaltung der Rasthaken überraschenderweise einen verbesserten Halt in der Montageöffnung des Montageelements bietet, wie es oben erwähnt wurde.

Des Weiteren ist es von Vorteil, wenn dem Rasthaken diametral gegenüberliegend ein Einhängehaken vorgesehen ist. Dies vereinfacht die Montage wesentlich, da die Verrasteinrichtung mittels des Einhängehakens an einem unteren Abschnitt der Montageöffnung eingehängt und dann mit dem Einhängehaken als Drehpunkt um den Rand der Montageöffnung verschwenkt wird bis der Rasthaken mit dem Rand der Montageöffnung in Eingriff kommt und die Tülle verriegelt bzw. verrastet.

Vorzugsweise liegt die zweite Innenumfangsfläche zwischen 1,5 und 2,5 mm radial außerhalb der ersten Innenumfangsfläche. Dies gilt dabei bevorzugt für jede Stelle der Fläche. D. h. wird die erste Innenumfangsfläche in die zweite Innenumfangsfläche projiziert, so liegt der Abstand zwischen diesen beiden Flächen an jeder Stelle in einem Bereich zwischen 1,5 und 2,5 mm. Dabei kann der Abstand an jeder Stelle gleich (gleicher Querschnitt) oder aber unterschiedlich (unterschiedlicher Querschnitt) ausgestaltet sein.

Um das Herausziehen des Kerns nach dem Umgießen der Verrasteinrichtungen mit Gummi in einer im Wesentlichen translatorischen Richtung zu ermöglichen, ist die zweite Innenumfangsfläche vorzugsweise im Wesentlichen parallel zur Längsachse des Mittelabschnitts verlaufend vorgesehen.

Des Weiteren ist es bevorzugt, dass beide zweiten Innenumfangsflächen, d. h. die zweite Innenumfangsfläche der ersten Verrasteinrichtung am ersten Kopf und die zweite Innenumfangsfläche an der zweiten Verrasteinrichtung am zweiten Kopf gleich ausgebildet sind.

Bei der vorliegenden Erfindung wird die Verrasteinrichtung aus hartelastischem Kunststoff in ein Formwerkzeug als Einsatz eingelegt und bei sehr hohen Temperaturen (180-200°C) mit Gummi umspritzt. Aus diesem Grund muss es sich bei dem hartelastischen Kunststoff um einen hochtemperaturbeständigen Kunststoff handeln, der darüber hinaus jedoch seine elastischen Eigenschaften beibehalten muss, damit die Verrastung der Tülle problemlos funktioniert. Aus diesem Grund ist es bevorzugt, Polyamid verstärkt mit 14% Glasfaser zu verwenden. Ein derartiger Kunststoff ist beispielsweise Zytel^{®} von DuPont, bei dem es sich um ein Polyamid aus Nylon 66 mit 14% Glasfaser handelt.

Des Weiteren ist es bevorzugt, dass die Köpfe an ihren offenen Enden wenigstens eine radial außerhalb des Stegs umlaufende Dichtlippe bilden, um die Tülle am Montageelement abzudichten und den Durchtritt eines Mediums von einer Seite des Montageelements zur anderen zu verhindern.

Darüber hinaus schlägt die vorliegende Erfindung ein Verfahren zur Herstellung einer oben beschriebenen Tülle vor. Bei diesem Verfahren werden zunächst zwei Kunststoffrahmen ausgeformt, die die Verrasteinrichtungen der Tülle bilden und, wie es oben beschrieben wurde, den umlaufenden Steg sowie den bzw. die Rasthaken aufweisen. Diese Kunststoffrahmen werden aus einem hartelastischen Kunststoff vorzugsweise spritzgegossen. Nach dem Aushärten werden diese Kunststoffrahmen in ein Formwerkzeug mit einem Kern eingelegt in dem der schlauchförmige Tüllenkörper auszubilden ist. Im Anschluss werden die Kunststoffrahmen gleichermaßen wie der Kern mit Gummi umspritzt. Dieses Umspritzen entspricht im Wesentlichen einem aus der Reifenherstellung bekannten Vulkanisier-Verfahren, bei dem unter sehr hohen Temperaturen die Vernetzung stattfindet und der Gummi aushärtet. Dabei wird in dem Formwerkzeug der längliche, schlauchförmige Tüllenkörper mit im Wesentlichen geradlinig verlaufenden Mittelabschnitt und Köpfen an beiden Enden ausgebildet. Indem die Kunststoffrahmen umspritz werden, bildet sich eine integrale Verbindung der Kunststoffrahmen mit dem Tüllenkörper, so dass die Kunststoffrahmen zusammen mit dem Tüllenkörper eine kohärente Einheit bilden. Um den Kern zu entfernen, wird beispielsweise mittels Druckluft, die über den Kern zugeführt werden kann, der Tüllenkörper gedehnt bzw. ausgeweitet. Gleichzeitig wird der Kern durch einen der beiden Kunststoffrahmen in einer im Wesentlichen translatorischen Richtung herausgezogen. Zu diesem Zweck ist der wenigstens eine Kunststoffrahmen derart ausgebildet, dass der Kern durch den umlaufenden Steg führbar ist. Die Rasthaken können, wie es oben bereits beschrieben wurde, beim Herausziehen des Kerns leicht wegfedern. Bezüglich der Ausgestaltung der Kunststoffrahmen in Bezug auf den Tüllenkörper und damit den Kern, der durch den Hohlraum des Tüllenkörpers definiert wird, wird auf die obige Beschreibung der Tülle selbst Bezug genommen, um Wiederholungen zu vermeiden.

Weitere Vorteile und Merkmale der vorliegenden Erfindung werden aus der folgenden Beschreibung einer bevorzugten Ausführungsform ersichtlich, die unter Bezugnahme auf die begleitenden Zeichnungen erfolgt.

In den Zeichnungen zeigt:
Fig. 1 eine perspektivische Ansicht einer erfindungsgemäßen Tülle aus einer ersten Richtung;
Fig. 2 eine perspektivische Ansicht der erfindungsgemäßen Tülle in Fig. 1 aus einer zweiten Richtung;
Fig. 3 einen Querschnitt, der in Fig. 2 dargestellten Tülle entlang der Linie J-J;
Fig. 4 eine vergrößerte Darstellung des Bereichs O in Fig. 3;
Fig. 5 eine vergrößerte Ansicht des Bereichs P in Fig. 3; und
Fig. 6 einem Querschnitt entlang der Linie D-D in Fig. 3.

In den Zeichnungen sind gleiche Teile mit gleichen Bezugsziffern gekennzeichnet.

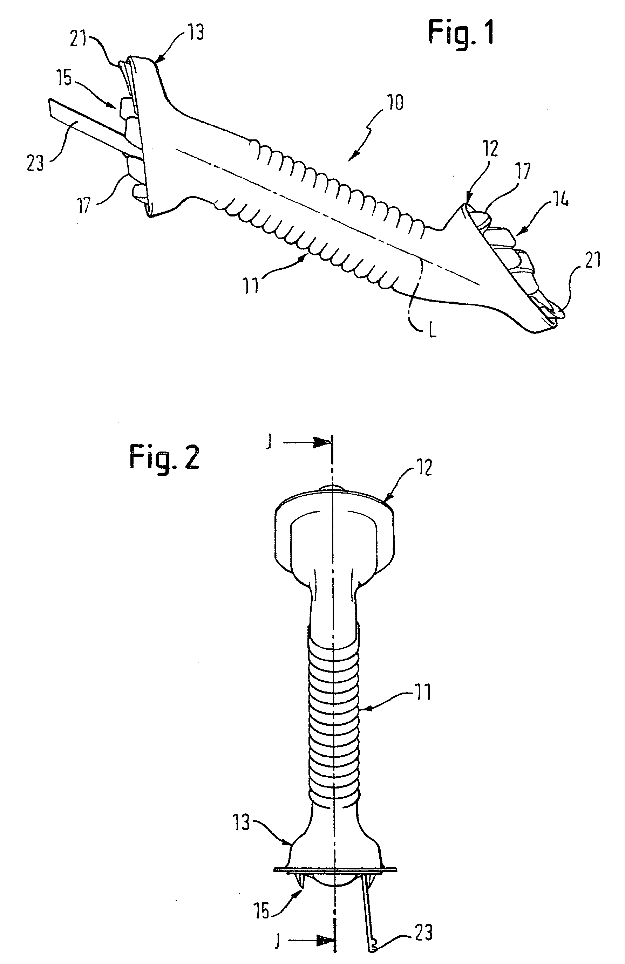

Die Fig. 1 und 2 zeigen eine Tülle gemäß der vorliegenden Erfindung, die zur Anordnung zwischen zwei Montageelementen und zum geschützten Durchführen von Kabeln/Leitungen oder dergleichen geeignet ist. Die erfindungsgemäße Tülle in Fig. 1 weist einen länglichen schlauchförmigen Tüllenkörper 10 auf. Der Tüllenkörper 10 umfasst einen im Wesentlichen geradlinig verlaufenden Mittelabschnitt 11, der in der dargestellten Ausführungsform balgförmig ausgebildet ist. An seinen beiden entgegengesetzten Enden weist der Mittelabschnitt 11 jeweils einen Kopf 12 bzw. 13 auf.

Darüber hinaus sind an jedem der Köpfe Verrasteinrichtungen 14 bzw. 15 ausgebildet. Die Verrasteinrichtungen 14, 15 dienen dem Einknöpfen der Tülle in Montageöffnungen der Montageelemente, bei denen es sich vorzugsweise um Öffnungen in Karosseriewänden eines Kraftfahrzeugs handelt, z. B. zwischen Tür oder Heckklappe und Karosserie. Des Weiteren sind die Verrasteinrichtungen 14, 15 integral mit dem Tüllenkörper 10 ausgebildet, so dass es sich um ein 2-Komponentenbauteil handelt. Mit anderen Worten können die Verrasteinrichtungen 14 und 15 nicht vom Tüllenkörper 10 entfernt werden ohne diesen zu zerstören und sind damit unlösbar verbunden.

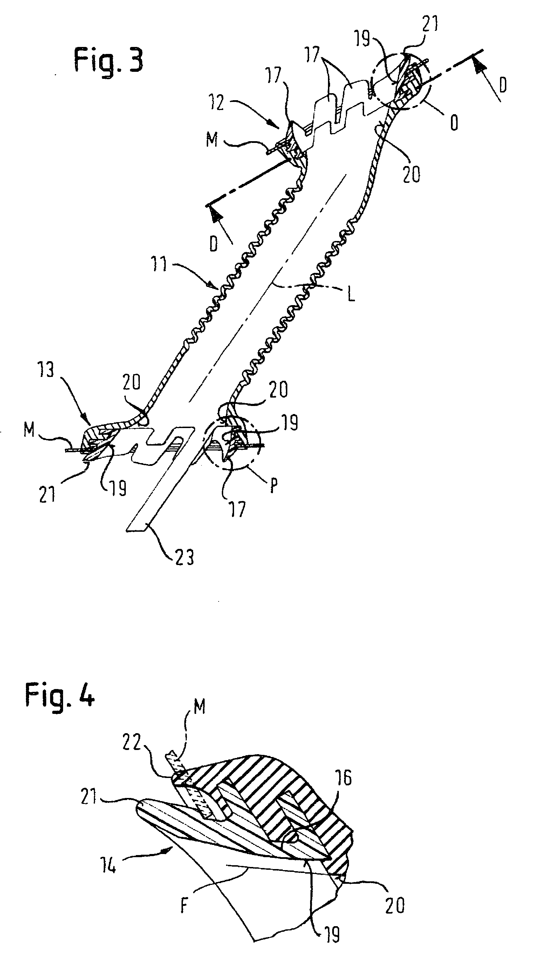

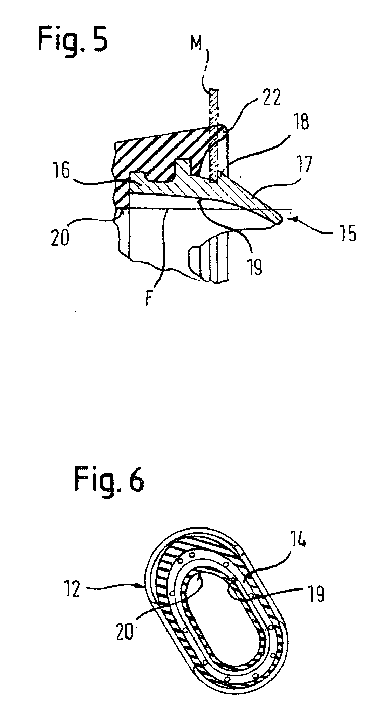

Wie es am besten aus den Fig. 4 und 5 ersichtlich ist, weisen die Verrasteinrichtungen 14, 15 einen umlaufenden Steg 16 auf. An diesem Steg 16 sind gemäß der dargestellten Ausführungsformen fünf Rasthaken 17 ausgebildet, die radial außenliegend jeweils eine Rastnase 18 aufweisen. Die Verrasteinrichtungen 14, 15 bilden auf der der Rastnase 18 entgegengesetzten Seite eine innenliegende Fläche, die hier als zweite Innenumfangsfläche 19 bezeichnet wird. Des Weiteren weisen die Verrasteinrichtungen 14 und 15, wie es aus Fig. 4 ersichtlich wird, einen Einhängehaken 21 auf, der die Montage der Tülle erleichtern soll und einem der Rasthaken diametral gegenüberliegend angeordnet ist.

An den Köpfen 12, 13 ist an deren offenen Enden ebenfalls eine Innenumfangsfläche ausgebildet, die im Folgenden als erste Innenumfangsfläche 20 bezeichnet wird. Die erste Innenumfangsfläche 20 sowie die zweite Innenumfangsfläche 19 sind hintereinander angeordnet.

Die Längsachse des Mittelabschnitts ist in den Figuren mit L bezeichnet. Insbesondere aus den Figuren 1 und 3 wird ersichtlich, dass die Köpfe 12 bzw. 13 relativ zur Längsachse des Mittelabschnitts geneigt angeordnet sind. Mit anderen Worten verläuft die Fläche (Dichtlippe 22) der Tülle, die zur Auflage auf dem Montageelement M dient, nicht senkrecht zur Längsmittelachse L, sondern in einem anderen Winkel und damit geneigt.

Die Köpfe 12, 13 weisen des Weiteren wenigstens eine umlaufende Dichtlippe 22 auf, die bei montierter Tülle auf dem Montageelement M abdichtet, um den Durchtritt eines Mediums von der einen Seite des Montageelements M auf die andere Seite zu verhindern. Des Weiteren weist wenigstens einer der Köpfe 12, 13 einen Montagesteg 23 auf, über den die Tülle auf einem Leitungssatz vormontiert und befestigt werden kann. Dies kann beispielsweise mittels eines Klebebandes erfolgen. Dadurch wird ein Verrutschen auf dem Kabelsatz bei der Montage, z. B. beim Durchführen durch Öffnungen, verhindert.

Die erfindungsgemäße Tülle wird als 2-Komponentenbauteil aus zwei unterschiedlichen Materialkomponenten hergestellt. Dabei ist der Tüllenkörper 10 aus Gummi, beispielsweise EPDM gebildet. Die beiden Verrasteinrichtungen 14, 15 an den beiden Köpfen 12, 13 sind hingegen aus einem hartelastischen Kunststoff, vorzugsweise einem hochtemperaturbeständigen Kunststoff, wie beispielsweise Polyamid mit 14% Glasfaser verstärkt, ausgebildet. Ein solcher Kunststoff ist als Zytel^{®} 80G14 von DuPont erhältlich.

Hergestellt wird die erfindungsgemäße Tülle, indem die Verrasteinrichtungen 14 und 15 in einem ersten Schritt spritzgegossen werden. Die fertigen und harten Teile werden anschließend in eine Form, als sog. Einsätze, eingesetzt und dann mit Gummi umspritzt. Dies erfolgt bei Temperaturen zwischen 180 und 200°C, damit der Gummi vernetzen kann. Dies entspricht einem üblichen Vulkanisiervorgang. Um den länglichen schlauchförmigen Tüllenkörper zu bilden, muss in der Form ein Kern vorgesehen sein, der mit dem Gummimaterial umspritzt wird. Dieser Kern muss nach der Herstellung und dem Aushärten des Gummis auf einfache und kostengünstige Art und Weise entfernbar sein. Dabei muss der Kern durch wenigstens eine der Verrasteinrichtungen geführt werden. Damit dies möglich ist, ist einerseits der Querschnitt wenigstens einer Verrasteinrichtung derart ausgestaltet, dass er größer ist als der maximale Querschnitt des Tüllenkörpers 10, in dem sich der Kern befindet. D. h. der Querschnitt des Kerns ist an keiner Stelle größer als der Querschnitt der Verrasteinrichtung durch die der Kern herausgezogen wird. Darüber hinaus sind die zweite Innenumfangsfläche 19, der wenigstens einen Verrasteinrichtung bzw. deren Steg 16, vorzugsweise jedoch beider, derart ausgestaltet, dass sie radial außerhalb der Flucht der ersten Innenumfangsfläche 20 an den Köpfen 12 bzw. 13 des Tüllenkörpers 10 verlaufen. Die Flucht der ersten Innenumfangsfläche 20 ist in den Fig. 4 und 5 beispielhaft dargestellt und mit dem Buchstaben F gekennzeichnet. Insbesondere wird die Innenumfangsfläche der Köpfe dabei durch den Abschnitt gebildet, der parallel zur Längsachse L verläuft. Darüber hinaus ist es wichtig, dass an der Schnittstelle zwischen der Innenumfangsfläche des jeweiligen Kopfes 12 bzw. 13 und der Innenumfangsfläche 19 der jeweiligen Verrasteinrichtung 14 bzw. 15 die Innenumfangsfläche 19 radial nach außen versetzt angeordnet ist. Dieser radiale Versatz beträgt bei der dargestellten Ausführungsform 2 mm. Ferner weisen die erste und zweite Innenumfangsfläche die im Wesentlichen gleiche Querschnittsform auf. Wie es in Fig. 6 dargestellt ist, ist der Querschnitt elliptisch bzw. oval ausgebildet, wobei der Querschnitt der zweiten Innenumfangsfläche um den radialen Versatz größer ausgebildet ist. Durch diese Ausgestaltung ergibt sich an der Schnittstelle zwischen den Innenumfangsflächen ein im wesentlichen fließender Übergang.

Wie es aus Fig. 5 ersichtlich ist, schneidet die Flucht F der ersten Innenumfangsfläche 20 den Rasthaken 17. Dieser ist jedoch derart elastisch ausgebildet, dass er beim Entfernen des Kerns radial nach außen wegfedern kann.

Durch die oben beschriebene Ausgestaltung, den Kern im Wesentlichen translatorisch in Richtung der Längsachse L durch die Verrasteinrichtung, in diesem Fall 15, aus dem Tüllenkörper 10 zu ziehen.

Da es sich um einen elliptischen Querschnitt handelt, wie dies beispielsweise aus Fig. 6 ersichtlich ist, müssen nur die Abschnitte der zweiten Innenumfangsfläche 19 radial nach außen versetzt fluchtend zur ersten Innenumfangsfläche 20 angeordnet sein, die linker und rechter Hand in der Figur angeordnet sind. Die in der Blattebene vorne und hinten angeordneten Abschnitte des Querschnitts müssen hingegen nicht radial nach außen versetzt fluchtend ausgestaltet sein, sondern können lediglich radial außerhalb der Flucht angeordnet werden.

Die erfindungsgemäße Ausgestaltung ermöglicht es daher, eine Tülle mit einem beidseits mit Köpfen versehenen Tüllenkörper auszubilden, bei der der Tüllenkörper aus Gummi und die an den beiden Enden angebrachten Verrasteinrichtungen aus hartelastischem Kunststoff gebildet sind, wobei bei der Herstellung der notwendige Kern nach dem Aushärten des Gummis leicht und umkompliziert entfernt werden kann und gleichzeitig auch bei geneigt angeordneten Köpfen ausreichende Haltekräfte erzielt werden. Dementsprechend ermöglicht es die vorliegende Erfindung, die Vorteile der Eingangs genannten Tüllen miteinander zu kombinieren.

## Patentansprüche

1. Tülle zur Anordnung zwischen zwei Montageelementen zum geschützten Durchführen von Kabeln, Leitungen oder dergleichen, umfassend
einen länglichen, schlauchförmigen Tüllenkörper (10) mit einem im Wesentlichen geradlinig verlaufenden Mittelabschnitt (11) und Köpfen (12, 13) an den Enden, wobei die Köpfe (12, 13) an ihren offenen Enden eine erste Innenumfangsfläche (20) bilden; und
eine Verrasteinrichtung (14, 15) zum Einknöpfen der Tülle in Montageöffnungen der Montageelemente (M) an jedem der Köpfe (12, 13) und integral damit ausgebildet, die einen umlaufenden Steg (16) mit wenigstens einem daran ausgebildeten Rasthaken (17) aufweist, der wenigstens eine radial außen liegende Rastnase (18) aufweist, wobei der Steg entgegengesetzt der Rastnase (18) eine zweite Innenumfangsfläche (19) bildet, wobei
der Tüllenkörper (11) aus Gummi und die Verrasteinrichtungen (14, 15) aus hartelastischem Kunststoff gebildet sind;
und wenigstens eine der zweiten Innenumfangsflächen (19) derart ausgestaltet ist, dass sie radial außerhalb der Flucht der entsprechenden ersten Innenumfangsfläche (20) verläuft,
**dadurch gekennzeichnet, dass**
die Köpfe (12, 13) relativ zur Längsachse des Mittelabschnitts (11) geneigt angeordnet sind.

2. Tülle nach Anspruch 1, bei der die zweite Innenumfangsfläche (19) radial nach außen versetzt mit der entsprechenden ersten Innenumfangsfläche (20) fluchtend ausgestaltet ist.

3. Tülle nach einem der vorstehenden Ansprüche, bei der der Tüllenkörper (11) im Querschnitt flach, vorzugsweise oval, ausgestaltet ist und zumindest die Abschnitte der zweiten Innenumfangsfläche (19), die den kürzeren oder längeren Seiten des flachen Querschnitts entsprechen mit den entsprechenden Abschnitten der entsprechenden ersten Innenumfangsfläche (20) radial nach außen versetzt fluchten.

4. Tülle nach Anspruch 3, bei der der Rasthaken (17) an einem Abschnitt des Stegs (16) ausgebildet ist, der die, den kürzeren oder längeren Seiten entsprechenden Abschnitte der zweiten Innenumfangsfläche (19) bildet.

5. Tülle nach Anspruch 4, bei der wenigstens ein dem Rasthaken (17) diametral gegenüberliegender Einhängehaken (21) vorgesehen ist.

6. Tülle nach einem der vorstehenden Ansprüche, bei der der radiale Versatz zwischen 1,5 und 2, 5mm liegt.

7. Tülle nach einem der vorstehenden Ansprüche, bei der die zweite Innenumfangsfläche (19) im Wesentlichen parallel zur Längsachse des Mittelabschnitts (11) verläuft.

8. Tülle nach einem der vorstehenden Ansprüche, bei der der hartelastische Kunststoff Polyamid verstärkt mit 14% Glasfaser ist.

9. Tülle nach einem der vorstehenden Ansprüche, bei der die Köpfe (12, 13) an ihren offenen Enden wenigstens eine radial außerhalb des Stegs (16) umlaufende Dichtlippe (22) bilden.

## Claims

1. Bush for arrangement between two assembly elements for protected passage of cables, pipes or the like, comprising an elongated, tubular bush body (10) having a central section (11) running essentially in a straight line and heads (12, 13) on the ends, wherein the heads (12, 13) at their open ends form a first inner peripheral surface (20); and a locking device (14, 15) for buttoning the bush into assembly openings of the assembly elements (M) at each of the heads (12, 13) and formed integrally therewith, which has an annular bar (16) with at least one locking hook (17) formed thereon which has at least one radially outwardly lying locking nose (18), wherein the bar opposite the locking nose (18) forms a second inner peripheral surface (19), wherein the bush body (11) is formed from rubber and the locking devices (14, 15) are formed from hard- elastic plastic; and at least one of the second inner peripheral surfaces (19) is designed such that it runs radially outside of the alignment of the corresponding first inner peripheral surface (20), **characterised in that** the heads (12, 13) are arranged at an angle relative to the longitudinal axis of the central section (11).

2. Bush according to claim 1, in which the second inner peripheral surface (19) offset radially outwards is designed to be aligned with the corresponding first inner peripheral surface (20).

3. Bush according to one of the above claims, in which the bush body (11) is designed to be flat, preferably oval, in cross-section and at least the sections of the second inner peripheral surface (19), which correspond to the shorter or longer sides of the flat cross-section, are aligned with the corresponding sections of the corresponding first inner peripheral surface (20) offset radially outwards.

4. Bush according to claim 3, in which the locking hook (17) is formed on a section of the bar (16), which forms the sections of the second inner peripheral surface (19) corresponding to the shorter or longer sides.

5. Bush according to claim 4, in which at least one suspension hook (21) which is diametrally opposite the locking hook (17) is provided.

6. Bush according to one of the above claims, in which the radial offset is between 1.5 and 2.5 mm.

7. Bush according to one of the above claims, in which the second inner peripheral surface (19) runs essentially parallel to the longitudinal axis of the central section (11).

8. Bush according to one of the above claims, in which the hard-elastic plastic is polyamide reinforced with 14% of glass fibres.

9. Bush according to one of the above claims, in which the heads (12, 13) at their open ends form at least one sealing lip (22) circulating radially outside of the bar (16).

## Revendications

1. Passe-câble, destiné à être disposé entre deux éléments de montage, permettant un passage protégé de câbles, conducteurs ou analogues, comprenant :
un corps de passe-câble (10) en forme de tuyau souple, allongé, avec un tronçon médian (11) s'étendant de manière sensiblement rectiligne et des têtes (12, 13) aux extrémités, les têtes (12, 13) formant à leurs extrémités ouvertes une première surface périphérique intérieure (20)
; et
un dispositif d'encliquetage (14, 15), pour boutonner le passe-câble dans des ouvertures de montage des éléments de montage (M) à chacune des têtes (12, 13) et réalisé d'une seule pièce avec celles-ci, présentant une nervure (16) circulaire avec au moins un crochet d'encliquetage (17) réalisé sur elle, présentant au moins un ergot d'encliquetage (18) disposé radialement extérieurement, la nervure formant, en sens opposé à l'ergot d'encliquetage (18), une deuxième surface périphérique intérieure (19), où
le corps de passe-câble (10) est formé en caoutchouc et les dispositifs d'encliquetage (14, 15) sont formés en matière synthétique élastiquement dure ;
et au moins l'une des deuxièmes surfaces périphériques intérieures (19) est configurée de manière qu'elle s'étende radialement hors de l'alignement de la première surface périphérique intérieure (20) correspondante,
**caractérisé en ce que**
les têtes (12, 13) sont disposées de manière inclinées par rapport à l'axe longitudinal du tronçon médian (11).

2. Passe-câble selon la revendication 1, dans lequel la deuxième surface périphérique intérieure (19) est décalée radialement vers l'extérieur, en alignement avec la première surface périphérique intérieure (20) correspondante.

3. Passe-câble selon l'une des revendications précédentes, dans lequel le corps de passe-câble (10) présente une section transversale de configuration plate, de préférence ovale, et au moins les tronçons de la deuxième surface périphérique intérieure (19), qui correspondent avec les côtés plus courts ou plus longs de la section transversale plate, sont en alignement, décalé radialement vers l'extérieur, avec les tronçons correspondants de la première surface périphérique intérieure (20) correspondante.

4. Passe-câble selon la revendication 3, dans lequel le crochet d'encliquetage (17) est réalisé sur un tronçon de
la nervure (16) qui forme les tronçons, correspondant aux côtés plus courts ou plus longs, de la deuxième surface périphérique intérieure (19).

5. Passe-câble selon la revendication 4, dans lequel un crochet d'accrochage (21), diamétralement opposé au crochet d'encliquetage (17), est prévu.

6. Passe-câble selon l'une des revendications précédentes, dans lequel le décalage radial est dans la fourchette comprise entre 1,5 et 2,5 mm.

7. Passe-câble selon l'une des revendications précédentes, dans lequel la deuxième surface périphérique intérieure (19) s'étend sensiblement parallèlement à l'axe
longitudinal du tronçon médian (11).

8. Passe-câble selon l'une des revendications précédentes, dans lequel la matière synthétique élastiquement dure est un polyamide renforcé par 14 % de fibres de verre.

9. Passe-câble selon l'une des revendications précédentes, dans lequel les têtes (12, 13) forment, à leurs extrémités ouvertes, au moins une lèvre d'étanchéité (22) faisant le pourtour radialement extérieurement à la nervure (16).
